# EUROPEAN PATENT APPLICATION

(11) **EP 3 203 426 A1**
(43) Date of publication of application: **09.08.2017**
(21) Application number: 17154505.6
(22) Date of filing: 03.02.2017
(51) Int. Cl.: G06Q 20/20, G07G 1/12

(54) **CHECKOUT SYSTEM AND SETTLEMENT APPARATUS**

(30) Priority: 03.02.2016 JP 2016019274
(71) Applicant: Toshiba TEC Kabushiki Kaisha, Tokyo 141-0032 (JP)
(72) Inventor: MIYAKAWA, Daichi, Shinagawa-ku, Tokyo 141-8562 (JP)
(74) Representative: Takeuchi, Maya

(57) **Abstract**

A registration apparatus sends settlement data and sending destination information for identifying a settlement apparatus set as a sending destination to the settlement apparatus set as the sending destination via a network. Each settlement apparatus stores the settlement data in a storage area if execution of a settlement processing of the received settlement data is possible. Each settlement apparatus confirms whether or not the settlement apparatus identified by the sending destination information received together with the settlement data is coincident with another settlement apparatus set as a transfer destination if execution of the settlement processing of the received settlement data is not possible, and transfers the settlement data to another settlement apparatus set as the transfer destination if the identified settlement apparatus is not coincident with another settlement apparatus. Each settlement apparatus executes the settlement processing on the basis of the settlement data stored in the storage area.

## Description

### FIELD

The present invention generally relates to checking out technologies used e.g. for a retail store and, in particular, embodiments described herein relate to a checkout system and a settlement apparatus used in the checkout system as well as a checking out method.

### BACKGROUND

As a checkout system for a retail store, there is a type of the system in which a registration apparatus for generating settlement data required for settlement of a transaction and a settlement apparatus for executing a settlement processing of the transaction on the basis of the settlement data in each transaction are separated. The registration apparatus waits for input of data relating to a commodity sales. If the data relating to the commodity sales is input by an operator, the registration apparatus generates settlement data on the basis of the data relating to the commodity sales, and sends the settlement data to the settlement apparatus. The settlement apparatus waits for input of payment data for the settlement data. If the payment data is input by the operator, the settlement apparatus executes the settlement processing of the transaction on the basis of the settlement data and the payment data. Such a checkout system described above includes a two-person operation in which the registration apparatus and the settlement apparatus are respectively operated by different store clerks, and a sharing operation, a so-called semi-self-checkout system, in which the registration apparatus is operated by a store clerk and the settlement apparatus is operated by a customer.

In the case of the semi-self-checkout system, if a customer spends much time on the operation of the settlement apparatus, customers who wait for the settlement take patience. In order to avoid such a situation, a plurality of settlement apparatuses is connected with one registration apparatus. Then, the registration apparatus selects any one of the settlement apparatuses in each transaction, and sends settlement data to the selected settlement apparatus.

To solve such problems, there is provided a checkout system comprising:
a registration apparatus; and
a plurality of settlement apparatuses connected with the registration apparatus via a network, wherein
the registration apparatus includes,
a generation module configured to generate settlement data required for settlement of a transaction on the basis of input data, and
a sending module configured to send the settlement data and sending destination information for identifying the settlement apparatus set as a sending destination to the settlement apparatus set as the sending destination via the network, wherein
each of the plurality of the settlement apparatuses, includes,
a reception module configured to receive the settlement data transmitted via the network,
a storage module configured to store the settlement data in a storage area if execution of a settlement processing of the settlement data received by the reception module is possible,
a transfer module configured to confirm whether or not the settlement apparatus identified by the sending destination information received together with the settlement data is coincident with another settlement apparatus set as a transfer destination if execution of the settlement processing of the settlement data received by the reception module is not possible, and to transfer the settlement data to another settlement apparatus set as the transfer destination if the identified settlement apparatus is not coincident with another settlement apparatus, and
a processing module configured to execute the settlement processing on the basis of the settlement data stored in the storage area.

Preferably, each of the settlement apparatuses further includes,
an acceptance notification module configured to notify the registration apparatus that execution of the settlement processing is possible if execution of the settlement processing of the settlement data received by the reception module is possible, and
the registration apparatus further includes,
an informing module configured to carry out an informing operation for guiding a customer to the settlement apparatus that notifies that execution of the settlement processing is possible.

Preferably still, each of the settlement apparatuses further includes a non-acceptance notification module configured to notify the registration apparatus that execution of the settlement is not possible via the network if the settlement apparatus identified by the sending destination information received together with the settlement data is coincident with another settlement apparatus set as the transfer destination.

Preferably yet, the registration apparatus further includes,
a storage section configured to store the sending destination information in a rewritable manner and
a change module configured to change the sending destination information stored in the storage section, wherein
the sending module sends the settlement data and the sending destination information stored in the storage section to the settlement apparatus identified by the sending destination information.

The invention also relates to a settlement apparatus which is connected, via a network, with a registration apparatus which sends settlement data required for settlement of a transaction and sending destination information for identifying a settlement apparatus set as a sending destination, comprising:
a reception module configured to receive the settlement data transmitted via the network;
a storage module configured to store the settlement data in a storage area if execution of a settlement processing of the settlement data received by the reception module is possible;
a transfer module configured to confirm whether or not the settlement apparatus identified by the sending destination information received together with the settlement data is coincident with another settlement apparatus set as a transfer destination if execution of the settlement processing of the settlement data received by the reception module is not possible, and to transfer the settlement data to another settlement apparatus set as the transfer destination if the identified settlement apparatus is not coincident with another settlement apparatus; and
a processing module configured to execute the settlement processing on the basis of the settlement data stored in the storage area.

Preferably, the settlement apparatus further comprises,
an acceptance notification module configured to notify the registration apparatus that execution of the settlement processing is possible if execution of the settlement processing of the settlement data received by the reception module is possible, wherein
the registration apparatus further includes,
an informing module configured to carry out an informing operation for guiding a customer to the settlement apparatus that notifies that execution of the settlement processing is possible.

Preferably still, the settlement apparatus further comprises a non-acceptance notification module configured to notify the registration apparatus that execution of the settlement is not possible via the network if the settlement apparatus identified by the sending destination information received together with the settlement data is coincident with another settlement apparatus set as the transfer destination.

Preferably yet, the registration apparatus further includes,
a storage section configured to store the sending destination information in a rewritable manner and
a change module configured to change the sending destination information stored in the storage section, wherein
the sending module sends the settlement data and the sending destination information stored in the storage section to the settlement apparatus identified by the sending destination information.

The invention further concerns a method for performing a checkout comprising:
a registration apparatus; and
a plurality of settlement apparatuses connected with the registration apparatus via a network, the method comprising the steps of:
   - generating, by a generation module, settlement data required for settlement of a transaction on the basis of input data, and
   - sending, by a sending module, the settlement data and sending destination information for identifying the settlement apparatus set as a sending destination to the settlement apparatus set as the sending destination via the network,
   - receiving, by a reception module, the settlement data transmitted via the network,
   - storing, by a storage module, the settlement data in a storage area if execution of a settlement processing of the settlement data received by the reception module is possible,
   - confirming, by a transfer module, whether or not the settlement apparatus identified by the sending destination information received together with the settlement data is coincident with another settlement apparatus set as a transfer destination if execution of the settlement processing of the settlement data received by the reception module is not possible, and to transfer the settlement data to another settlement apparatus set as the transfer destination if the identified settlement apparatus is not coincident with another settlement apparatus, and
   - executing, by a processing module, the settlement processing on the basis of the settlement data stored in the storage area.

Suitably, the method further comprises the steps of:
- notifying, by an acceptance notification module, the registration apparatus that execution of the settlement processing is possible if execution of the settlement processing of the settlement data received by the reception module is possible, and
- carrying out, by an informing module, an informing operation for guiding a customer to the settlement apparatus that notifies that execution of the settlement processing is possible.

Suitably still, the method further comprises the steps of:
- notifying, by a non-acceptance notification module, the registration apparatus that execution of the settlement is not possible via the network if the settlement apparatus identified by the sending destination information received together with the settlement data is coincident with another settlement apparatus set as the transfer destination.

Suitably yet, the method further comprises the steps of:
- storing, by a storage section, the sending destination information in a rewritable manner and
- changing, by a change module, the sending destination information stored in the storage section, wherein
the sending module sends the settlement data and the sending destination information stored in the storage section to the settlement apparatus identified by the sending destination information.

### DESCRIPTION OF THE DRAWINGS

The above and other objects, features and advantages of the present invention will be made apparent from the following description of the preferred embodiments, given as non-limiting examples, with reference to the accompanying drawings, in which:
Fig. 1 is a schematic diagram illustrating a checkout system according to an embodiment;
Fig. 2 is a block diagram illustrating main circuit arrangements of a registration apparatus and a settlement apparatus;
Fig. 3 is a flowchart illustrating main procedures of an information processing executed by a CPU of the registration apparatus.
Fig. 4 is a flowchart illustrating main procedures of a reception interruption processing executed by a CPU of the settlement apparatus;
Fig. 5 is a schematic diagram illustrating an example of display of a registration screen;
Fig. 6 is a schematic diagram illustrating an example of display of a settlement confirmation screen; and
Fig. 7 is a schematic diagram illustrating an example of the display of the settlement confirmation screen.

### DETAILED DESCRIPTION

In accordance with an embodiment, a checkout system comprises a registration apparatus and a plurality of settlement apparatuses connected with the registration apparatus via a network.

The registration apparatus includes a generation module and a sending module. The generation module generates settlement data required for settlement of a transaction on the basis of input data. The sending module sends the settlement data and sending destination information for identifying the settlement apparatus set as a sending destination to the settlement apparatus set as the sending destination via the network.

Each of the settlement apparatuses includes a reception module, a storage module, a transfer module and a processing module. The reception module receives the settlement data transmitted via the network. The storage module stores the settlement data in a storage area if execution of a settlement processing of the settlement data received by the reception module is possible. The transfer module confirms whether or not the settlement apparatus identified by the sending destination information received together with the settlement data is coincident with another settlement apparatus set as a transfer destination if execution of the settlement processing of the settlement data received by the reception module is not possible, and transfers the settlement data to another settlement apparatus set as the transfer destination if the identified settlement apparatus is not coincident with another settlement apparatus. The processing module executes the settlement processing on the basis of the settlement data stored in the storage area.

Hereinafter, an embodiment is described with reference to the accompanying drawings.

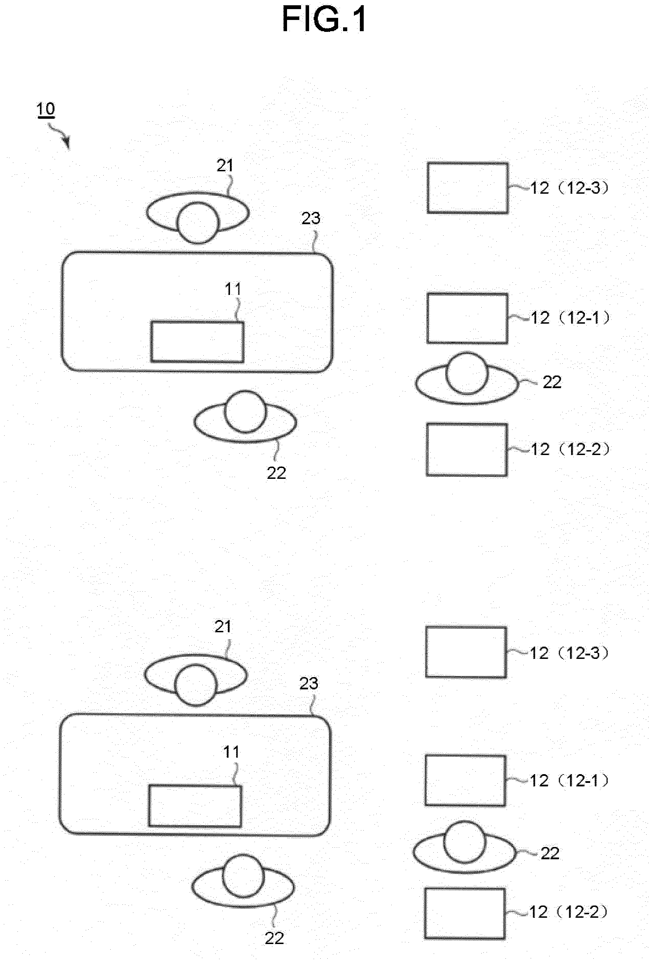

Fig. 1 is a schematic diagram illustrating a checkout system 10 according to the present embodiment. The checkout system 10 includes a plurality of registration apparatuses 11 and settlement apparatuses 12. The number of the settlement apparatuses 12 is more than that of the registration apparatuses 11.

The registration apparatus 11 and the settlement apparatus 12 are arranged at each checkout lane in a store. The number of the registration apparatuses 11 and the number of the settlement apparatuses 12 arranged in one checkout lane are not limited. In Fig. 1, a case in which one registration apparatus 11 and three settlement apparatuses 12 are arranged at each of two checkout lanes is illustrated. In detail, one registration apparatus 11 and three settlement apparatuses 12 (12-1, 12-2 and 12-3) are arranged at one checkout lane. A distance between the settlement apparatus 12-1 and the registration apparatus 11 is shortest, a distance between the settlement apparatus 12-2 and the registration apparatus 11 is second, and a distance between the settlement apparatus 12-3 and the registration apparatus 11 is farthest.

The checkout system 10 is a semi-self-checkout system. In other words, a store clerk 21 who is generally called as a checker is an operator of the registration apparatus 11. A customer 22 whose purchased commodity is registered by the registration apparatus 11 is an operator of the settlement apparatus 12.

The registration apparatus 11 is mounted on a working table 23 in Fig. 1. The working table 23 has a rectangular top plate. Passages (checkout lanes) for customers 22 are respectively formed by arranging a plurality of the working tables 23 in such a manner that the top plates are arranged in parallel in the longitudinal directions thoseof.

The registration apparatus 11 is equipped with functions including a sales registration processing of a commodity, creation of settlement data and transfer of the settlement data to the settlement apparatus 12. The sales registration processing of the commodity registers data of a commodity purchased by the customer 22 in the registration apparatus 11. For example, by scanning a barcode attached to a commodity with a scanner, the data of the commodity such as a sales quantity, a sales amount and the like is registered in the registration apparatus 11. The settlement data is generated for settlement of commodities sales-registered as one transaction. A commodity code, a commodity name, a unit price, a sales quantity and a sales amount of a sales-registered commodity and a total quantity and a total amount of the transaction is included in the settlement data.

The registration apparatus 11 sets one of the three settlement apparatuses 12 arranged at the same checkout lane as a sending destination of the settlement data. Which settlement apparatus 12 is set as the sending destination is optional. The registration apparatus 11 sends the settlement data to the one settlement apparatus 12 set as the sending destination.

The settlement apparatus 12 is equipped with a function of the settlement processing. The settlement apparatus 12 processes the settlement of the transaction on the basis of the settlement data if receiving the settlement data from the registration apparatus 11. The settlement processing processes the settlement of the transaction, a commodity trading, on the basis of the settlement data. Cash, a credit card and electronic money are generally used as a payment method in the settlement.

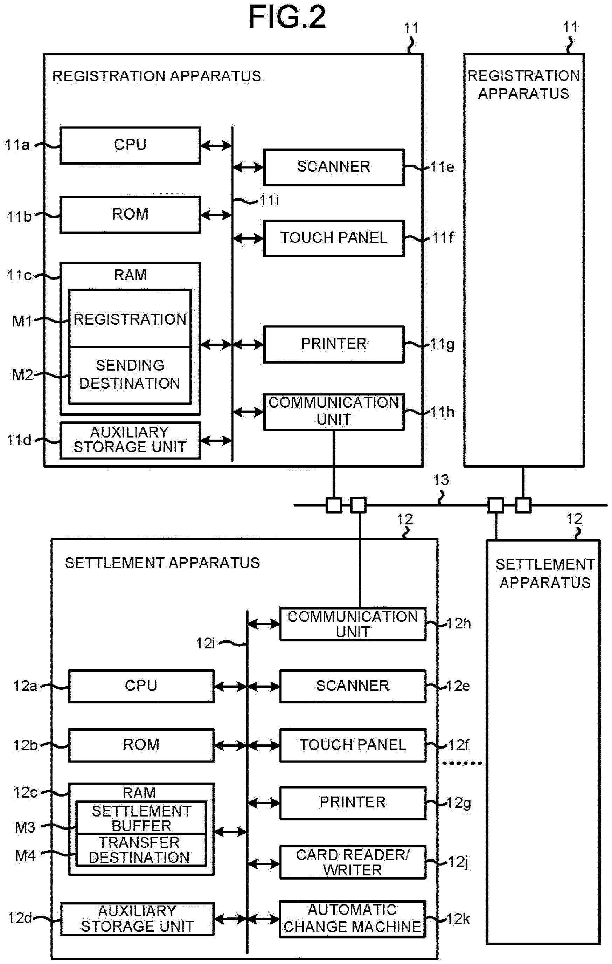

Fig. 2 is a block diagram illustrating main circuit arrangements of the registration apparatus 11 and the settlement apparatus 12. The registration apparatus 11 and the settlement apparatus 12 at each checkout lane both are connected with a LAN (local area network) 13 serving as an in-store network. A server (not shown) is connected to the LAN 13. The server stores a commodity database in which commodity information such as a commodity name, a unit price and the like is set in association with a commodity code of each commodity. The server may further store other databases.

The registration apparatus 11 and the settlement apparatus 12 transfer and receive information via the LAN 13. The network can also use another communication network such as an Internet or a wireless LAN instead of the LAN 13. The information such as the settlement data may be transmitted and received between the registration apparatus 11 and the settlement apparatus 12 via the server.

The registration apparatus 11 includes a CPU 11a, a ROM 11b, a RAM 11c, an auxiliary storage unit 11d, a scanner 11e, a touch panel 11f, a printer 11g, a communication unit 11h and a transmission system 11i.

The CPU 11a is connected with the ROM 11b, the RAM 11c and the auxiliary storage unit 11d via the transmission system 11i to constitute a computer. The CPU 11a acts as a main unit of the computer. The CPU 11a controls each section for realizing various functions as the registration apparatus 11 according to an operating system, middleware and application programs stored in the ROM 11b and the RAM 11c.

The ROM 11b acts as a main storage part of the computer. The ROM 11b stores the operating system. As occasion demands, the ROM 11b stores the middleware or application programs. Further, as occasion demands, the ROM 11b also stores data required to execute various processing by the CPU 11a.

The RAM 11c acts as a main storage part of the computer. As occasion demands, the RAM 11c stores data required to execute various processing by the CPU 11a. Furthermore, the RAM 11c is used as a so-called working area for storing data temporarily used when the CPU 11a executes various processing.

The auxiliary storage unit 11d acts as an auxiliary storage section of the computer. The auxiliary storage unit 11d stores data used by the CPU 11a which carries out various processing, or data created in the processing by the CPU 11a. As the auxiliary storage unit 11d, for example, an EEPROM, an HDD or an SSD can be used. The application program stored in the ROM 11b or the auxiliary storage unit 11d includes a control program described with respect to the information processing executed by the registration apparatus 11.

The scanner 11e reads a barcode attached to a commodity to acquire the commodity code of the commodity. The touch panel 11f includes a display device and a touch sensor. The touch panel 11f includes a touch panel for store clerk and a touch panel for customer. The touch panel 11f for store clerk is arranged on the working table 23 in such a manner that a display screen faces the working space of the store clerk 21. The touch panel 11f for customer is arranged on the working table 23 in such a manner that a display screen faces the passage for customer 22. The printer 11g prints various character strings or images on a receipt paper to issue a receipt. The communication unit 11h carries out data communication with the plurality of the settlement apparatuses 12 connected via the LAN 13. The communication unit 11h can also carry out the data communication with other commodity registration apparatuses 11 via the LAN 13.

The transmission system 11i transmits data to be transmitted among the CPU 11a, the ROM 11b, the RAM 11c, the auxiliary storage unit 11d, the scanner 11e, the touch panel 11f, the printer 11g and the communication unit 11h. As the transmission system 11i, a well-known system which includes various buses such as a system bus and the like and various interface circuits for connecting these buses with each section can be used. As hardware of such a registration apparatus 11, for example, an existing POS terminal can be used.

The settlement apparatus 12 includes a CPU 12a, a ROM 12b, a RAM 12c, an auxiliary storage unit 12d, a scanner 12e, a touch panel 12f, a printer 12g, a communication unit 12h, a card reader/writer 12j, an automatic change machine 12k and a transmission system 12i.

The card reader/writer 12i includes a function of reading data recorded in a card and a function of writing data into the card. The card includes a card for settlement such as a credit card, a debit card, an electronic money card, a pre-paid card and the like. The automatic change machine 12k receives deposited coins and bills. Further, the automatic change machine 12k discharges coins and bills as change. Except for the card reader/writer 12j and the automatic change machine 12k, the CPU 12a, the ROM 12b, the RAM 12c, the auxiliary storage unit 12d, the scanner 12e, the touch panel 12f, the printer 12g, the communication unit 12h and the transmission system 12i have the same functions as the registration apparatus 11 described above. The CPU 12a is connected with the ROM 12b, the RAM 12c and the auxiliary storage unit 12d via the transmission system 12i to constitute a computer. The CPU 12a controls each section for realizing various functions as the settlement apparatus 12 according to an operating system, middleware and application programs stored in the ROM 12b and the RAM 12c. The application program stored in the ROM 12b or the auxiliary storage unit 12d includes a control program described with respect to an information processing executed by the settlement apparatus 12. As hardware of such a settlement apparatus 12, a POS terminal supporting, for example, an existing self-checkout system can be used.

The checkout system 10 with such constitutions described above forms data memory areas M1 and M2 in the RAM 11c of the registration apparatus 11. The data memory area M1 stores the commodity code, the commodity name, the unit price, the sales quantity and the sales amount of each commodity sales-registered as one transaction. The commodity code is a unique code for individually identifying each commodity. The commodity code represented by, for example, the barcode is assigned to each commodity, and the registration apparatus 11 can acquire the commodity code by scanning the barcode with the scanner 11e. The commodity name and the unit price are the name and the price per unit of the commodity identified by the corresponding commodity code. Hereinafter, the data memory area M1 is referred to as a registration memory M1.

The data memory area M2 stores sending destination information. The sending destination information identifies a settlement apparatus 12 serving as the sending destination of the settlement data. One of the plurality of the settlement apparatuses 12 is set as the sending destination of the settlement data with respect to this registration apparatus 11. For example, a default value of the sending destination information capable of identifying the settlement apparatus 12 set as the sending destination is stored in the auxiliary storage unit 11d, and the CPU 11a writes the default value to the data memory area M2 at the time of the startup. A unique ID is preset to each settlement apparatus 12. The ID can be used as the sending destination information. Alternatively, a number, a symbol or a code is assigned in association with the ID of each settlement apparatus 12, and may be set as the sending destination information. Hereinafter, the data memory area M2 is referred to as a sending destination memory M2.

The checkout system 10 forms data memory areas M3 and M4 in the RAM 12c of the settlement apparatus 12. The data memory area M3 stores the settlement data. Hereinafter, the data memory area M3 is referred to as a settlement buffer M3. The data memory area M4 stores transfer destination information. The transfer destination information identifies another settlement apparatus 12 serving as the transfer destination of the settlement data. One of other settlement apparatuses 12 is set as the transfer destination of the settlement data with respect to this settlement apparatus 12. For example, a default value of the transfer destination information capable of identifying the settlement apparatus 12 set as the transfer destination is stored in the auxiliary storage unit 12d, and the CPU 12a writes the default value into the data memory area M4 at the time of the startup. A unique ID is preset to each settlement apparatus 12. The ID can be used as the transfer destination information. Alternatively, a number, a symbol or a code is assigned in association with the ID of each settlement apparatus 12, and may be set as the transfer destination information. Hereinafter, the data memory area M4 is referred to as a transfer destination memory M4.

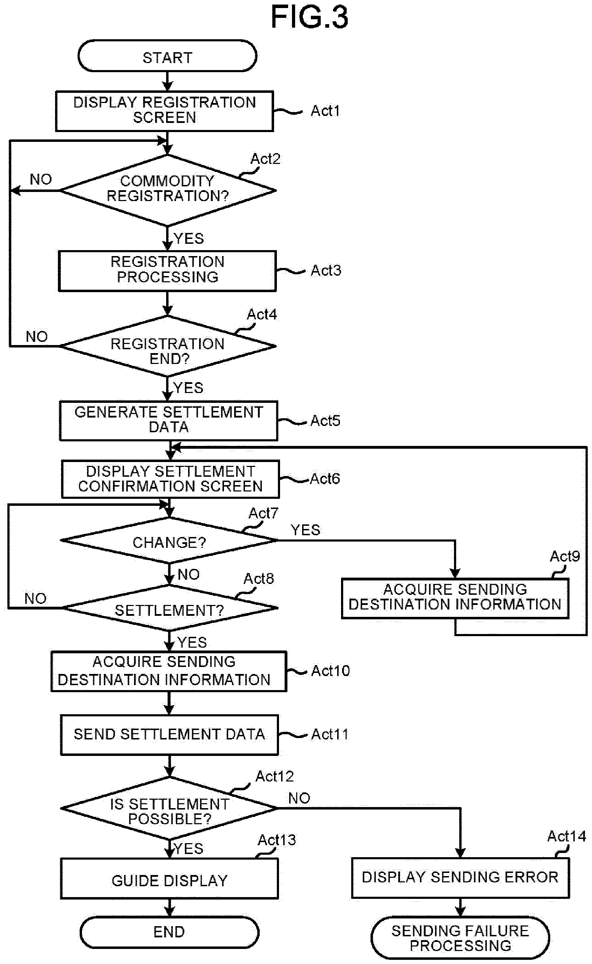

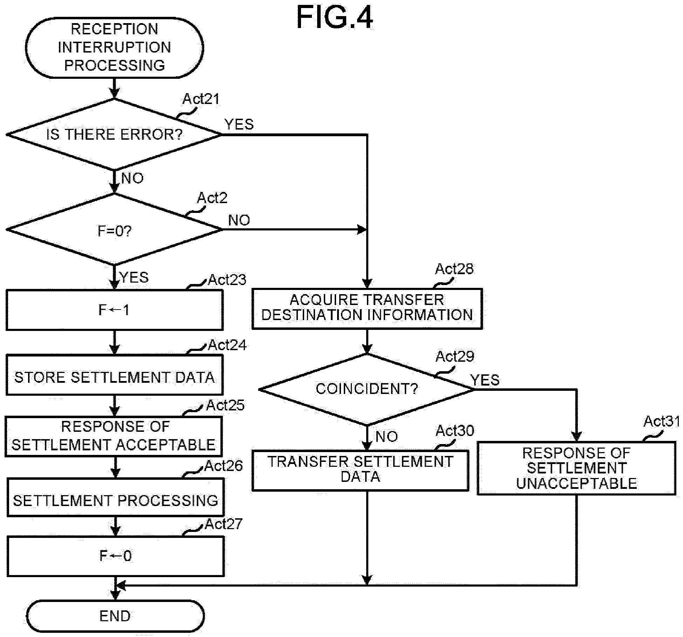

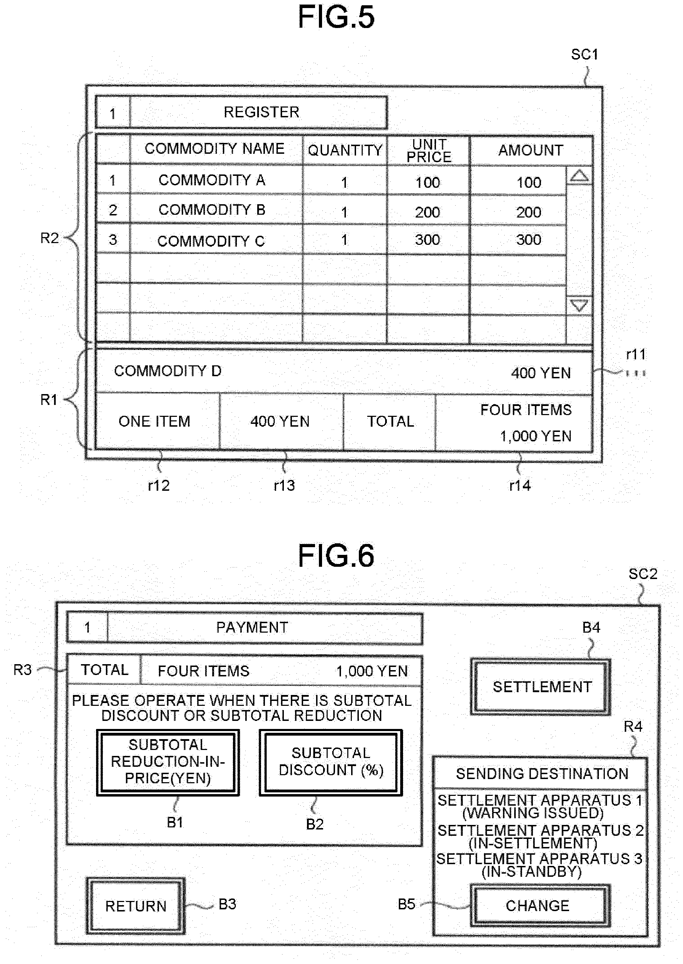

Fig. 3 is a flowchart illustrating main procedures of an information processing executed by the CPU 11a of the registration apparatus 11 according to the control program. Fig. 4 is a flowchart illustrating main procedures of an information processing executed by the CPU 12a of the settlement apparatus 12 at the time of the reception of the settlement data according to the control program. Fig. 5 to Fig. 7 are plan views illustrating examples of screens displayed on the touch panel 11f of the registration apparatus 11. Hereinafter, operations of the checkout system 10 are described with reference to Fig. 3 to Fig. 7. Furthermore, the contents of the processing described below are one example, and various processing capable of achieving the same result can be suitably utilized.

Firstly, the operations of the registration apparatus 11 are described.

If the registration apparatus 11 is activated in a mode of carrying out the registration processing of the purchased commodity, the CPU 11a starts the information processing indicated by the procedures shown in the flowchart in Fig. 3. Firstly, the CPU 11a displays a registration screen SC1 (refer to Fig. 5) on a part of the touch panel 11f (Act 1).

The registration screen SC1 displays contents of the registration memory M1, to enable the store clerk 21 to confirm an implementation status of the registration processing. An example of the registration screen SC1 is shown in Fig. 5. The registration screen SC1 includes display areas R1 and R2. The display area R1 displays the commodity name, the unit price, the sales quantity (number of items) and the sales amount relating to the most newly sales-registered commodity, and the total quantity and the total amount of the purchased commodity after the commodity is registered. The display area R2 displays a list of the commodity name, the unit price, the sales quantity (number of items) and the sales amount relating to a sales-registered commodity prior to the commodity shown in the display area R1.

The CPU 11a displays various function buttons (not shown) such as a commodity button for designating a commodity by the store clerk 21 and a subtotal button in an area outside of the registration screen SC1 on the touch panel 11f.

The store clerk 21 recognizes that the sales registration of the purchased commodity is possible if confirming that the registration screen SC1 is displayed on the touch panel 11f. Then, if the customer 22 having a purchased commodity comes to the working table 23, the store clerk 21 operates, for example, the scanner 11e or the commodity button to sequentially input commodity codes of the purchased commodities. If the input of all the commodity codes of the purchased commodities is completed, the store clerk 21 touches the subtotal button. Through the foregoing operations, the sales registration of the commodities purchased by one customer is ended.

The CPU 11a of the registration apparatus 11 executes the following information processing according to such sales registration operation described above. Firstly, the CPU 11a waits for the commodity registration (Act 2). If the commodity code is input via the scanner 11e or the commodity button (YES in Act 2), the CPU 11a executes the registration processing of the commodity sales data (Act 3). The CPU 11a acquires the commodity information such as the commodity name, the unit price and the like set in the commodity database in association with the commodity code. Further, the CPU 11a multiplies the sales quantity by the unit price to calculate the sales amount corresponding to the sales quantity. The sales quantity is an input numerical value if it is input by a numeric keypad before the commodity code is input, and is "1" if not input through the numeric keypad. In this way, the CPU 11a creates the commodity sales data including the commodity code, the commodity name, the unit price, the sales quantity and the sales amount. Then, the CPU 11a stores the commodity sales data in the registration memory M1. At this time, the CPU 11a updates the registration screen SC1 on the basis of the data in the registration memory M1.

The CPU 11a confirms whether or not completion of the registration of the sold commodities is declared (Act 4). For example, if the subtotal button is touched, the CPU 11a determines that completion of the registration is declared. If completion of the registration is not declared (NO in Act 4), the CPU 11a returns to the processing in Act 2 to wait for the commodity registration. If completion of the registration is declared (YES in Act 4), the CPU 11a generates the settlement data on the basis of the data in the registration memory M1 (Act 5). The CPU 11a acts as a generation module for generating the settlement data required for the settlement of the transaction on the basis of the input data (data relating to commodity sales) through the processing in Act 2 to Act 5.

If the settlement data is generated, the CPU 11a displays a settlement confirmation screen SC2 (refer to Fig. 6) on a part of the screen of the touch panel 11f (Act 6).

An example of the settlement confirmation screen SC2 is shown in Fig. 6. The settlement confirmation screen SC2 includes display areas R3 and R4 and buttons B1, B2, B3, B4 and B5. The display area R3 displays the total quantity and the total amount of the commodities stored in the registration memory M1. The buttons B1 and B2 refer to a subtotal reduction-in-price button B1 and a subtotal discount button B2 used by the store clerk 21 to designate that a discount or reduction-in-price is applied to the total amount. The button B3 refers to a return button B3 used by the store clerk 21 to designate that a part of the area of the screen of the touch panel 11f returns to the registration screen SC1. The button B4 refers to a settlement button B4 used by the store clerk 21 to instruct the end of the registration of the commodities relating to one transaction and the transition of the processing to the settlement.

The display area R4 displays information with which an operator, i.e., casher, is capable of specifying a settlement apparatus 12 identified with the sending destination information stored in the sending destination memory M2. Further, the display area R4 also displays a state of the settlement apparatus 12 identified with the sending destination information. The state of the settlement apparatus 12 includes "in-settlement", "warning issued" and "in-standby". The "in-settlement" refers to a state in which the settlement processing is being executed by the settlement apparatus 12. The CPU 12a of the settlement apparatus 12 which is executing the settlement processing includes a function of generating an in-processing signal. The in-processing signal is output from the communication unit 12h to the registration apparatus 11 via the LAN 13. The "warning issued" refers to a state in which, for example, lack of change amount or lack of receipt paper=occurs in the settlement apparatus 12. The automatic change machine 12k includes a function of generating a warning signal of the lack of change amount if the residual quantity of money stored as change is less than a threshold value. The printer 12g includes a function of generating a warning signal of the lack of receipt paper if the residual quantity of receipt papers is less than a threshold value. These warning signals are output from the communication unit 12h to the registration apparatus 11 via the LAN 13. The "in-standby" refers to a state in which the settlement apparatus 12 stands by the settlement processing. The CPU 12a of the settlement apparatus 12 which does not execute the settlement processing and has no warning such as the lack of receipt paper or the lack of change includes a function of generating an in-standby signal. The in-standby signal is output from the communication unit 12h to the registration apparatus 11 via the LAN 13.

The CPU 11a of the registration apparatus 11 updates state information of the display area R4 if receiving the in-processing signal, the warning signal or the in-standby signal issued from the settlement apparatus 12 identified by the sending destination information stored in the sending destination memory M2.

The button B5 refers to a change button B5 used by the store clerk 21 to instruct change of the sending destination information. For example, it is assumed that the three settlement apparatuses 12-1, 12-2 and 12-3 connected with the registration apparatus 11 are set in such a manner that the first place is the settlement apparatus 12-1, the second place is the settlement apparatus 12-2 and the third place is the settlement apparatus 12-3 as a priority of the sending destination of the settlement data. In this case, the sending destination information stored in the sending destination memory M2 is changed to information for identifying a settlement apparatus of which the priority is lower by one place each time the change button B5 is touched. If the change button B5 is touched in a state in which the information for identifying the settlement apparatus 12-3 of which the priority is lowest is stored in the sending destination memory M2, the sending destination information is changed to information for identifying the settlement apparatus 12-1 of which the priority is highest.

The store clerk 21 who confirms the settlement confirmation screen SC2 determines whether or not it is necessary to change the sending destination of the settlement data on the basis of the information of the display area R4. For example, in a case in which the "warning issued" is displayed, the sending destination of the settlement data is naturally changed. In this case, the store clerk 21 touches the change button B5. If it is not necessary to change the sending destination of the settlement data, the store clerk 21 touches the settlement button B4.

The CPU 11a which displays the settlement confirmation screen SC2 waits for touch on the change button B5 (Act 7) or the settlement button B4 (Act 8). In this state, if the change button B5 is touched (Yes in Act 7), the CPU 11a changes the sending destination information stored in the sending destination memory M2 according to the foregoing priority of the sending destination of the settlement data (Act 9). Then, the CPU 11a waits for touch on the change button B5 or the settlement button B4 again. The sending destination memory M2 acts as a storage section for storing the sending destination information in a rewritable manner. The CPU 11a acts as a change module for changing the sending destination information stored in the storage section described above.

If the settlement button B4 is touched (Yes in Act 8), the CPU 11a acquires the sending destination information stored in the sending destination memory M2 (Act 10). Then, the CPU 11a outputs the settlement data generated in the processing in Act 5 and the sending destination information acquired in the processing in Act 10 to the communication unit 11h (Act 11). Then, the CPU 11a instructs the communication unit 11h to send a data transmission message including the settlement data and the sending destination information to the address of the settlement apparatus 12 identified by the sending destination information. In response to the instruction described above, a data transmission message of which a sending destination address is filled with the communication address of the settlement apparatus 12 identified by the sending destination information and a sending source address is filled with the communication address of the registration apparatus is created in the communication unit 11h to send it to the LAN 13. This data transmission message is received by one settlement apparatus of which the communication address is set as the sending destination address in the plurality of the settlement apparatuses 12 connected with the LAN 13. In other words, the communication unit 12h of the settlement apparatus 12 receives a data transmission message of which the sending destination address is filled with the communication address of the settlement apparatus 12 in the data transmission messages transmitted to the LAN 13. The CPU 11a of the registration apparatus 11 acts as a sending module for sending the settlement data and the sending destination information for identifying the settlement apparatus 12 set as the sending destination to one settlement apparatus 12 set as the sending destination in the plurality of the settlement apparatuses 12 in cooperation with the communication unit 11h through the processing in Act 10 and Act 11. On the other hand, the CPU 12a of the settlement apparatus 12 acts as a reception module for receiving the settlement data transferred via the network (LAN 13) in cooperation with the communication unit 12h.

The CPU 12a of the settlement apparatus 12 starts the information processing indicated by the procedures shown in the flowchart in Fig. 4 if receiving the data transmission message via the communication unit 12h. Firstly, the CPU 12a confirms whether or not an error occurs (Act 21). The error refers to, for example, a case (no-stored-change error) in which no money for change is stored in the automatic change machine 12k, or a case (paper-run-out error) in which receipt paper is run out in the printer 12g. The error is not limited to the foregoing cases. For example, in a case (change-near-end) in which money for change is less than a predetermine amount or in a case (paper-near-end) in which the residual quantity of the receipt papers is less than a predetermine amount, it may be certified that error occurs.

If no error occurs (NO in Act 21), the CPU 12a determines whether or not a busy flag F is reset to "0" (Act 22). The busy flag is information of one bit which is reset to "0" while the settlement apparatus 12 does not execute the settlement processing, and set to "1" until the settlement processing is ended if started. The busy flag F is stored in, for example, the RAM 12c.

If the busy flag F is reset to "0" (YES in Act 22), the CPU 12a sets the busy flag F to "1" (Act 23). The CPU 12a stores the settlement data included in the data transmission message in the settlement buffer M3 (Act 24). Furthermore, the CPU 12a instructs the communication unit 12h to send a response command informing that settlement is acceptable to the address of the registration apparatus 11 (Act 25). In response to the response command described above, the response command, informing that the settlement is acceptable, of which the sending destination address is filled with the communication address of the registration apparatus 11 and the sending source address is filled with the communication address of this settlement apparatus 12 is created in the communication unit 11h to send it to the LAN 13. The response command is received by the registration apparatus 11 of which the communication address is set as the sending destination address. The CPU 12a acts as a storage module for storing the settlement data in the storage area (settlement buffer M3) if the settlement processing of the settlement data received by the reception module is possible through the processing in Act 21 to Act 24. Further, the CPU 12a acts as an acceptance notification module for notifying the registration apparatus 11 that execution of the settlement processing is possible if the settlement processing of the settlement data received by the reception module can be executed through the processing in Act 21 to Act 25.

The CPU 12a of the settlement apparatus 12 which sends the response command informing that the settlement is acceptable executes the settlement processing of the transaction on the basis of the settlement data stored in the settlement buffer M3 (Act 26). The settlement processing settles the transaction indicated with the settlement data in response to the operation by the customer 22, and is the same as that carried out by an existing self-checkout POS terminal, and thus the detailed description thereof is omitted. If the settlement processing is ended, the CPU 12a resets the busy flag F to "0" (Act 27). The CPU 12a acts as a processing module for executing the settlement processing on the basis of the settlement data stored in the storage area (settlement buffer M3) through the processing in Act 26.

On the other hand, if error occurs (YES in Act 21), or the busy flag F is set to "1" (NO in Act 22), the CPU 12a acquires the transfer destination information stored in the transfer destination memory M4 (Act 28). Then, the CPU 11a confirms whether or not the transfer destination information is coincident with the sending destination information included in the data transmission message (Act 29).

If the transfer destination information is not coincident with the sending destination information (NO in Act 29), the CPU 12a outputs the settlement data and the sending destination information included in the data transmission message to the communication unit 12h (Act 30). Then, the CPU 12a instructs the communication unit 12h to transfer the data transmission message including the settlement data and the sending destination information to the address of another settlement apparatus 12 identified by the transfer destination information. In response to the instruction described above, a data transmission message of which the sending destination address is filled with the communication address of the settlement apparatus 12 identified by the transfer destination information is created in the communication unit 12h to send it to the LAN 13. The data transmission message is received by one settlement apparatus of which the communication address is set as the sending destination address in the plurality of the settlement apparatuses 12 connected with the LAN 13. In other words, the communication unit 12h of the settlement apparatus 12 receives a data transmission message of which the sending destination address is the communication address of the settlement apparatus 12 in the data transmission messages transmitted on the LAN 13. The CPU 12a acts as a transfer module for confirming whether or not the settlement apparatus identified by the sending destination information received together with the settlement data is coincident with another settlement apparatus set as a transfer destination if the settlement processing of the settlement data received by the reception module cannot be executed, and transferring the settlement data to another settlement apparatus set as the transfer destination via the network (LAN 13) if the identified settlement apparatus is not coincident with another settlement apparatus.

If the transfer destination information is coincident with the sending destination information (YES in Act 29), the CPU 12a instructs the communication unit 12h to send a response command informing that settlement is unacceptable to the address of the registration apparatus 11 (Act 31). In response to the instruction described above, the response command, informing that the settlement is unacceptable, of which the sending destination address is filled with the communication address of the registration apparatus 11 and the sending source address is filled with the communication address of the settlement apparatus 12 is created in the communication unit 12h to send it onto the LAN 13. The response command is received by the registration apparatus 11 connected with the LAN 13. The CPU 12a acts as a non-acceptance notification module for notifying the registration apparatus 11 that the settlement is unacceptable via the network (LAN 13) if the settlement apparatus identified by the sending destination information received together with the settlement data is coincident with another settlement apparatus set as a transfer destination.

The CPU 11a of the registration apparatus 11 which sends the settlement data to one of the settlement apparatuses 12 set as the sending destination in the processing in Act 11 of Fig. 3 waits for the response command (Act 12). If receiving the response command informing that the settlement is acceptable via the communication unit 11h (YES in Act 12), the CPU 11a carries out guide display on the settlement confirmation screen SC2 (Act 13).

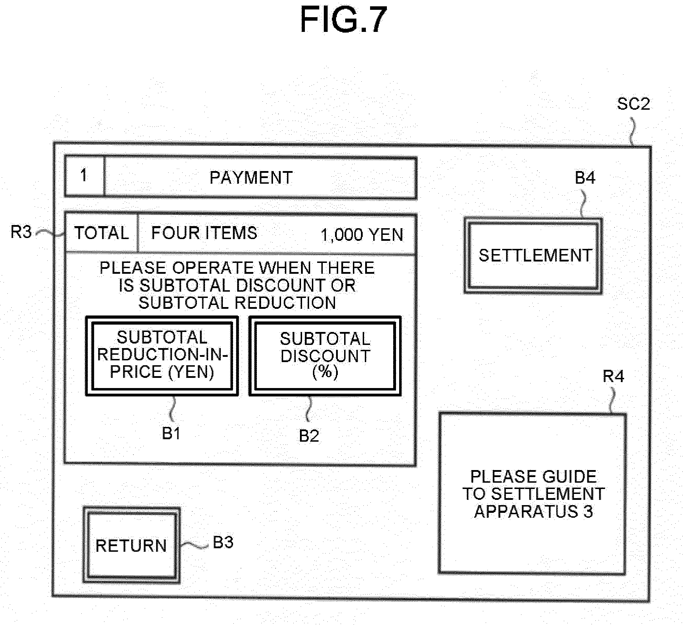

Fig. 7 illustrates an example of the settlement confirmation screen SC2 on which the guide display is performed. This example is a case in which the response command informing that the settlement is acceptable is sent from the settlement apparatus 12-3. The guide display guides a customer to the settlement apparatus 12-3 which notifies that execution of the settlement processing is possible. The guide display is performed in the display area R4. The store clerk 21 who confirms this guide display guides the customer 22 to carry out the settlement with the settlement apparatus 12-3 indicated on the guide display. For example, the customer 22 who receives the instruction to the settlement apparatus 12-3 moves to the location at which the settlement apparatus 12-3 is installed. The CPU 11a acts as an informing module for carrying out an informing operation with which the customer is guided to the settlement apparatus notifying that execution of the settlement processing is possible in cooperation with the touch panel 11f through the processing in Act 12 and Act 13.

On the other hand, if receiving the response command informing that the settlement is unacceptable from the settlement apparatus 12 (NO in Act 12), the CPU 11a displays a message indicating that the settlement data cannot be sent in a part of area of the settlement confirmation screen SC2, for example, the display area R4 (Act 14). After that, the CPU 11a executes a sending failure processing. In the sending failure processing, for example, a unique identification code is attached to the settlement data to send the settlement data to the server, and the printer 11g is driven to issue a settlement ticket on which a barcode indicating the identification code is printed. The settlement ticket is handed over to the customer. The customer reads the barcode of the settlement ticket with the scanner 12e of the settlement apparatus 12 installed at, for example, another place apart from the checkout lane. Thus, the CPU 12a of the settlement apparatus 12 acquires the settlement data to which the identification code obtained from the barcode is attached from the server. Then, the CPU 12a executes the settlement processing on the basis of the settlement data.

In the checkout system 10 shown in Fig. 1, it is assumed that the settlement apparatus 12-1 is set as the sending destination with respect to the registration apparatus 11. It is also assumed that the settlement apparatus 12-2 is set as the transfer destination with respect to the settlement apparatus 12-1, the settlement apparatus 12-3 is set as the transfer destination with respect to the settlement apparatus 12-2, and the settlement apparatus 12-1 is set as the transfer destination with respect to the settlement apparatus 12-3.

In this case described above, the registration apparatus 11 sends the settlement data to the settlement apparatus 12-1 specified by the sending destination information. The settlement data includes the sending destination information for identifying the settlement apparatus 12-1. In a case in which the settlement apparatus 12-1 can execute the settlement of the transaction, the response command informing that the settlement is acceptable is sent from the settlement apparatus 12-1 to the registration apparatus 11. If receiving the response command, the guide display on which the settlement apparatus 12-1 is indicated is performed in the registration apparatus 11.

On the contrary, if the settlement apparatus 12-1 cannot execute the settlement of the transaction, the transfer destination information stored in the transfer destination memory M4 of the settlement apparatus 12-1 is not coincident with the sending destination information received together with the settlement data. Therefore, the settlement data is transferred from the settlement apparatus 12-1 to the settlement apparatus 12-2. The settlement data includes also the sending destination information for identifying the settlement apparatus 12-1. If the settlement apparatus 12-2 can execute the settlement of the transaction, the response command informing that the settlement is acceptable is sent from the settlement apparatus 12-2 to the registration apparatus 11. The guide display on which the settlement apparatus 12-2 is indicated is performed in the registration apparatus 11 if receiving the command.

On the contrary, if the settlement apparatus 12-2 cannot execute the settlement of the transaction, the transfer destination information stored in the transfer destination memory M4 of the settlement apparatus 12-2 is not coincident with the sending destination information received together with the settlement data. Therefore, the settlement data is transferred from the settlement apparatus 12-2 to the settlement apparatus 12-3. The settlement data includes also the sending destination information for identifying the settlement apparatus 12-1. If the settlement apparatus 12-3 can execute the settlement of the transaction, the response command informing that the settlement is acceptable is sent from the settlement apparatus 12-3 to the registration apparatus 11. The guide display on which the settlement apparatus 12-3 is indicated is performed in the registration apparatus 11 if receiving the command.

On the contrary, if the settlement apparatus 12-3 cannot execute the settlement of the transaction, the transfer destination information stored in the transfer destination memory M4 of the settlement apparatus 12-3 is coincident with the sending destination information received together with the settlement data. Therefore, the response command informing that the settlement is unacceptable is sent from the settlement apparatus 12-3 to the registration apparatus 11. The sending error is displayed and the sending failure processing is executed in the registration apparatus 11 if receiving the command.

In this manner, according to the checkout system 10 described above, it is not required to select a settlement apparatus serving as the sending destination of the settlement data for each transaction through the registration apparatus 11 because all the registration apparatus 11 has to do is to send the settlement data to the settlement apparatus 12 identified by the sending destination information stored in the sending destination memory M2. Thus, for example, compared with a case in which the store clerk 21 who operates the registration apparatus 11 selects the settlement apparatus 12 serving as the sending destination of the settlement data for each transaction, a workload of the store clerk 21 can be reduced. Compared with a structure in which the registration apparatus 11 selects the sending destination of the settlement data for each transaction on the basis of the state of each settlement apparatus 12, a processing load of the registration apparatus 11 can be reduced. Furthermore, all the store clerk has to do is to guide the customer 22 according to the guide display, and thus a troublesome operation in which the store clerk visually confirms which one of the settlement apparatuses 12 can carry out the settlement processing is also eliminated.

Incidentally, in the settlement apparatus 12, there is a case in which lack of the change amount or lack of the receipt paper occurs as the settlement processing is repeated. In such a case, a warning signal is issued from the settlement apparatus 12 to the registration apparatus 11. If the warning signal is issued from the settlement apparatus 12-1 set as the sending destination to the registration apparatus 11, the state of the settlement apparatus 12-1, i.e., "warning issued", is displayed on the settlement confirmation screen SC2 as shown in Fig. 6. Thus, the store clerk touches the change button B5. Then, the sending destination information stored in the sending destination memory M2 is changed from the information for identifying the settlement apparatus 12-1 to the information for identifying the settlement apparatus 12-2. Since then, the registration apparatus 11 sends the sending destination information for identifying the settlement apparatus 12-2 and the settlement data to the settlement apparatus 12-2. If the settlement apparatus 12-2 cannot execute the settlement of the transaction, the settlement data is transferred from the settlement apparatus 12-2 to the settlement apparatus 12-3. If the settlement apparatus 12-3 cannot also execute the settlement of the transaction, the settlement data is transferred from the settlement apparatus 12-3 to the settlement apparatus 12-1. Then, if the settlement apparatus 12-1 cannot still also execute the settlement of the transaction, the transfer destination information stored in the transfer destination memory M4 of the settlement apparatus 12-1 is coincident with the sending destination information received together with the settlement data. Thus, the response command informing that the settlement is unacceptable is sent from the settlement apparatus 12-1 to the registration apparatus 11. In this way, the settlement apparatus 12 which initially receives the settlement data can be changed through the touch operation by the store clerk to the change button B5, and thus frequency in the settlement processing executed by the settlement apparatus 12 in the warning issued state can be reduced easily.

The present invention is not limited to the embodiment described above.

For example, in the embodiment, a case is exemplified in which the settlement apparatus 12 includes the transfer destination memory M4 and the identification information of another settlement apparatus set as the transfer destination is stored. As another embodiment, the transfer destination memory M4 may store information for identifying the settlement apparatus 12 set in association with the priority set for the plurality of the settlement apparatuses 12. In this case, the CPU 12a of the settlement apparatus 12 confirms whether or not the settlement apparatus identified by the sending destination information received together with the settlement data is coincident with another settlement apparatus lower in order than the identified settlement apparatus if the settlement processing of the settlement data cannot be executed, and transfers the settlement data to another settlement apparatus lower in order than the identified settlement apparatus if the identified settlement apparatus is not coincident with another settlement apparatus. In this way, the same effect as the present embodiment can be achieved.

Further, in the embodiment described above, the informing module is realized by carrying out the guide display on the touch panel 11f of the registration apparatus 11. The informing module is not limited to the guide display on the touch panel 11f. The customer may be guided to the settlement apparatus 12 which notifies that the settlement processing can be executed by a display output to another display medium or a voice output.

The transfer of the registration apparatus 11 and the settlement apparatus 12 is carried out in general in a state in which a program such as the control program is stored in a ROM. However, the present invention is not limited to this. The control program transferred separately from a computer apparatus may be written into a writable storage device included in the computer apparatus in response to an operation of a user. The transfer of the control program is recorded in a removable recording medium or can be carried out by communication via a network. The recording medium can store the program like a CD-ROM and a memory card, and its form is not limited as long as the program can be read by the apparatus. Further, functions obtained by installation or download of the program may be realized in cooperation with an OS (Operating System) inside the apparatus.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the framework of the invention. The accompanying claims and their equivalents are intended to cover such forms or modifications as would fall within the scope and framework of the invention.

## Claims

1. A checkout system comprising:
a registration apparatus; and
a plurality of settlement apparatuses connected with the registration apparatus via a network, wherein
the registration apparatus includes,
a generation module configured to generate settlement data required for settlement of a transaction on the basis of input data, and
a sending module configured to send the settlement data and sending destination information for identifying the settlement apparatus set as a sending destination to the settlement apparatus set as the sending destination via the network, wherein
each of the plurality of the settlement apparatuses, includes,
a reception module configured to receive the settlement data transmitted via the network,
a storage module configured to store the settlement data in a storage area if execution of a settlement processing of the settlement data received by the reception module is possible,
a transfer module configured to confirm whether or not the settlement apparatus identified by the sending destination information received together with the settlement data is coincident with another settlement apparatus set as a transfer destination if execution of the settlement processing of the settlement data received by the reception module is not possible, and to transfer the settlement data to another settlement apparatus set as the transfer destination if the identified settlement apparatus is not coincident with another settlement apparatus, and
a processing module configured to execute the settlement processing on the basis of the settlement data stored in the storage area.

2. The checkout system according to claim 1, wherein
each of the settlement apparatuses further includes,
an acceptance notification module configured to notify the registration apparatus that execution of the settlement processing is possible if execution of the settlement processing of the settlement data received by the reception module is possible, and
the registration apparatus further includes,
an informing module configured to carry out an informing operation for guiding a customer to the settlement apparatus that notifies that execution of the settlement processing is possible.

3. The checkout system according to claim 1 or 2, wherein
each of the settlement apparatuses further includes a non-acceptance notification module configured to notify the registration apparatus that execution of the settlement is not possible via the network if the settlement apparatus identified by the sending destination information received together with the settlement data is coincident with another settlement apparatus set as the transfer destination.

4. The checkout system according to any one of claims 1 to 3, wherein
the registration apparatus further includes,
a storage section configured to store the sending destination information in a rewritable manner and
a change module configured to change the sending destination information stored in the storage section, wherein
the sending module sends the settlement data and the sending destination information stored in the storage section to the settlement apparatus identified by the sending destination information.

5. A settlement apparatus which is connected, via a network, with a registration apparatus which sends settlement data required for settlement of a transaction and sending destination information for identifying a settlement apparatus set as a sending destination, comprising:
a reception module configured to receive the settlement data transmitted via the network;
a storage module configured to store the settlement data in a storage area if execution of a settlement processing of the settlement data received by the reception module is possible;
a transfer module configured to confirm whether or not the settlement apparatus identified by the sending destination information received together with the settlement data is coincident with another settlement apparatus set as a transfer destination if execution of the settlement processing of the settlement data received by the reception module is not possible, and to transfer the settlement data to another settlement apparatus set as the transfer destination if the identified settlement apparatus is not coincident with another settlement apparatus; and
a processing module configured to execute the settlement processing on the basis of the settlement data stored in the storage area.

6. The settlement apparatus according to claim 5, further comprising,
an acceptance notification module configured to notify the registration apparatus that execution of the settlement processing is possible if execution of the settlement processing of the settlement data received by the reception module is possible, wherein
the registration apparatus further includes,
an informing module configured to carry out an informing operation for guiding a customer to the settlement apparatus that notifies that execution of the settlement processing is possible.

7. The settlement apparatus according to claim 5 or 6, further comprising a non-acceptance notification module configured to notify the registration apparatus that execution of the settlement is not possible via the network if the settlement apparatus identified by the sending destination information received together with the settlement data is coincident with another settlement apparatus set as the transfer destination.

8. The settlement apparatus according to any one of claims 5 to 7, wherein
the registration apparatus further includes,
a storage section configured to store the sending destination information in a rewritable manner and
a change module configured to change the sending destination information stored in the storage section, wherein
the sending module sends the settlement data and the sending destination information stored in the storage section to the settlement apparatus identified by the sending destination information.

9. A method for performing a checkout comprising:
a registration apparatus; and
a plurality of settlement apparatuses connected with the registration apparatus via a network, the method comprising the steps of:
- generating, by a generation module, settlement data required for settlement of a transaction on the basis of input data, and
- sending, by a sending module, the settlement data and sending destination information for identifying the settlement apparatus set as a sending destination to the settlement apparatus set as the sending destination via the network,
- receiving, by a reception module, the settlement data transmitted via the network,
- storing, by a storage module, the settlement data in a storage area if execution of a settlement processing of the settlement data received by the reception module is possible,
- confirming, by a transfer module, whether or not the settlement apparatus identified by the sending destination information received together with the settlement data is coincident with another settlement apparatus set as a transfer destination if execution of the settlement processing of the settlement data received by the reception module is not possible, and to transfer the settlement data to another settlement apparatus set as the transfer destination if the identified settlement apparatus is not coincident with another settlement apparatus, and
- executing, by a processing module, the settlement processing on the basis of the settlement data stored in the storage area.

10. The method according to claim 9, further comprising the steps of:
- notifying, by an acceptance notification module, the registration apparatus that execution of the settlement processing is possible if execution of the settlement processing of the settlement data received by the reception module is possible, and
- carrying out, by an informing module, an informing operation for guiding a customer to the settlement apparatus that notifies that execution of the settlement processing is possible.

11. The method according to claim 9 or 10, further comprising the steps of:
- notifying, by a non-acceptance notification module, the registration apparatus that execution of the settlement is not possible via the network if the settlement apparatus identified by the sending destination information received together with the settlement data is coincident with another settlement apparatus set as the transfer destination.

12. The method according to any one of claims 9 to 11, further comprising the steps of:
- storing, by a storage section, the sending destination information in a rewritable manner and
- changing, by a change module, the sending destination information stored in the storage section, wherein
the sending module sends the settlement data and the sending destination information stored in the storage section to the settlement apparatus identified by the sending destination information.
